# EUROPEAN PATENT APPLICATION

(11) **EP 2 138 292 A1**
(43) Date of publication of application: **30.12.2009**
(21) Application number: 09163659.7
(22) Date of filing: 24.06.2009
(51) Int. Cl.: B29B 17/00, C08J 11/06

(54) **Recovery of cellular plastic material**

(30) Priority: 26.06.2008 EP 08159101
(71) Applicant: Olsson, Nenna, 246 21 Löddeköpinge (SE)
(72) Inventor: Olsson, Nenna, 246 21, Löddeköpinge (SE)
(74) Representative: Neij, Hans Mikael

(57) **Abstract**

The invention relates to e new environmentally friendly process in which cellular foamed polymer particles selected from the group consisting of cross-linked PVC rigid foam, polyurethane, polyester, polyether and polystyrene are recycled and reused in new extruded acoustics products together with other plastic components.

## Description

### FIELD OF INVENTION

The invention relates to a new environmentally friendly process in which cellular foamed polymer particles selected from the group consisting of cross-linked PVC rigid foam, polyurethane, polyester polyether and polystyrene are recycled and reused in new extruded acoustics products together with other plastic components.

### BACKGROUND OF THE INVENTION

When different product are produced from cross-linked PVC rigid foam, materials large amounts are discarded, wherein the discarded material have a density from 40 kg/m³. To reduce the volume of the discarded material, the discarded material is grinded and the material will then be packed as small well packed products. By such a process it is possible to reduce the density to about 400 to 1000 kg/m³. Additionally, combustion of such materials is not environmentally friendly and influences the climate changes and thereby not an alternative way nowadays.

The commonly used way to get rid of cross-linked PVC rigid foam, material is to deposit the material. However, the increase in saving our environment also result in an increasing demand to reduce the release of dangerous chlorinated substances and therefore there is a need of replacing old fashioned methods like combustion or deposition due to that they release chlorinated substances into the environment. A global problem is the increasing mountain of waste and the lack of recovery methods that in an ecological way recovers products without using the above mentioned methods. Combustion releases chorine gas which will be captured by a filter in the combustion oven, which is classified as being dangerous deposition material and cannot be destructed. In Sweden for example there are solely three approved plants wherein materials containing chlorine can be combusted. The process is very expensive and non-economic.

To save the ozone condition it might be that in the near future it will be forbidden to burn PVC globally, which will give rise to new deposited problem which will destroy the environment. Therefore there is a need of developing new environmentally friendly methods in which cross-linked PVC rigid foam, may be recovered and thereby reused. Accordingly there is also a need of developing new improved methods which efficiently can be used to recover cellular plastics, to reduce the large deposit of these plastics which have a low density.

### SUMMARY OF THE INVENTION

The invention relates to a new environmentally friendly process in which the above defined cross-linked PVC rigid foams, can be recovered and reused. The process have a number of profits such as no chlorine will be released into the air, and the large amounts of deposited chlorine containing PVC will be reduced and/or eliminated, an increase in the possibility to recover old products containing the PVC. Additionally, new products may be produced from the recovered material and the PVC will be recycled again and again.

In a first aspect the invention relates to an extruded or pressed acoustic material comprising from about 5 weight-% to about 60 weight-% of cellular foamed polymer particles selected from the group consisting of cross-linked PVC rigid foam, polyurethane, polyester, polyether and polystyrene and a binding agent being having a melting point below 180 °C and optionally cellulose materials, lime, fibres from tree, fibres glass and other synthetic fibres, wherein the total amount of b) is from about 40 weight-% to about 95 weight-%.

In a second aspect the invention relates to a method producing an extruded or pressed acoustic material comprising the steps of; providing used cellular foamed polymer particles selected from the group consisting of cross-linked PVC rigid foam, polyurethane, polyester, polyether and polystyrene, grinding and/or pulverising said cellular foamed polymer particles, adding at least one binding agent having a melting temperature below 180°C, as homogenising said cellular foamed polymer particles and said binding agent, moulding said cellular foamed polymer particles and binding agent and obtaining an acoustics material as defined above.

Thereby it is for the first time possible to produce light weight extruded or pressed acoustic materials, such as plates from reused cellular foamed polymer particles together with other discarded plastic materials and optionally glass wool. Acoustic materials which have increased acoustic properties compared to earlier materials.

### DETAILED DESCRIPTION OF THE INVENTION

The invention relates to new acoustic materials suitable to be used in all places were there is a need to reduce noise, such as floors, walls, roof as well as different noise walls which are found for example in close connection with railways. The new improved material being an extruded or pressed acoustic material comprising from about 5 weight-% (w.p.) to about 60 weight-% (w.p.) of cellular foamed polymer particles selected from the group consisting of cross-linked PVC rigid foam, polyurethane, polyester, polyether and polystyrene and a binding agent being having a melting point below 180°C and optionally cellulose materials, lime, fibres from tree, fibres glass and other synthetic fibres, wherein the total amount of b) is from about 40 weight-% to about 95 weight-%. It is the cellular foamed polymer particles that give the material the acoustic properties.

The extruded or pressed acoustic material may comprise the cellular foamed polymer particles in an amount from about 10 weight-% to about 50 weight-%, such as from about 10 weight-% to about 40 weight-% or from about 30 weight-% to about 50 weight-%. Specific examples include 15, 20, 25, 30, 35, 40, 45 or 50 weight-%.

The different materials may be obtained from different sources such as material that have not been used during the manufacturing of other products and which needs to be discarded, such as during the production of wing for wind power, small and large boats and ferries etc or other PVC rests that contains chlorine and may be extruded with soft PVC materials such as old floor plates, PVC cables as well as other materials containing PVC such as floor carpets, borders, tiles etc, wherein said recovered PVC material may be grinded to a size varying from 0.1- 5 mm and then be used as a recovered granulate. For example cross-linked PVC rigid foam has a low specific weight about 40 kg/m³ which prior to use will be grinded to a size of 0.001 - 1 mm. Another example being cellular foamed polymer products based on polyvinyl chloride.

When the cellular foam polymer material is homogenised a binding agent is added to the cellular foam polymer material, said binding agent having a melting temperature being below 180°C, such as below 170°C. The cellular foam polymer and binding agent is either moulded together either cold or warm moulding or extruded together. Together, all the ingredients are mixed together by an extrude machine or pressed by moulding to a homogenous mixture prior to that the mixture is moulded, wherein the homogenous mixture will be moulded into a hard and stabile product. In some cases the materials may be melted into flakes or granulate/agromerate prior to the materials are extruded or pressed into a product. The moulding may be performed with or without heat. If the materials are to be heat moulded together the temperature will be selected such as being below 180°C so that the binding agent will melt and bind to cellular foam polymer having a higher melting temperature and thereby a hard rigid product is produced. Prior to that the moulding step will be performed the components are homogenised. If the materials are extruded the different components are mixed prior to that the components are extruded together. However, independent on which method is used the cellular foam polymer is mixed with a binding agent, which melts at a temperature below 170°C, such as 120-180°C.

Examples of binding agents include soft PVC materials, such as PVC that can be formed into products. Said soft PVC has a melting point below 180°C. Other binding agents may be PE (polyeten), LDPE & LLDPE, (polyethylene) HDPE (high density polyethylene) PS (polystyrene), ABS (acrylonitrile butadiene styrene) , EPS (polystyrene), PET (polyethylene), i.e., PVC materials that does not contain chlorine. These materials have a lower melting point than cellular foam polymer and the two materials may therefore be extruded together into new products. Another group of binding agents are cellulose materials, lime, fibres from tree, fibres glass or other synthetic fibres.

Soft PVC may be used for the recovering of cellular foamed polymer particles in a size of up to about 5 mm. However, if a specific cellular foamed polymer particles sold under the trade mark divenylcell is used it may be used in a size of from 0.001 to 1mm. Examples of suitable machines to be used in the invention are extruder, calander or belt press or any other suitable machines.

To increase the acoustic properties or the disclosed material even more glass wool may be added in an amount up to about 30 weight-% of glass wool, such as 10, 15, 20, 25 or 30 weight-%.

### EXAMPLE

### Example 1. Plates produced by recovered PVC with heat moulding. One cellular foamed polymer particle that was used in the example was Divenylcell™.

**Table 1**

| No of plate | Contents of PVC waste | Moulding time [min/sek] | Temp. [°C] | Cooling [min] |
|---|---|---|---|---|
| 1 | PVC | 10-20 min | 160-180 | 10 |
| | Polyvinyl chloride waste + remains of metallic about 100 % | | | |
| 2 | Polyvinyl chloride/soft PVC waste about 50 % | 5-10 min | 130-180 | 10 |
| | Cross-linked PVC rigid foam waste about 50 % | | | |
| 3 | Granulate of soft PVC/ Polyvinyl chloride about 100 % | 25min | 140-180 | 5 |
| 4 | Granulate of soft PVC/ Polyvinyl chloride about 60 % | 10-25 min | 140-180 | 5 |
| | Cross-linked PVC rigid foam about 40 % | | | |
| 5 | Granulate of soft PVC/ Polyvinyl chloride included calcium carbonate about 70 % | 5-25 sek | 130-180 | 2-5 |
| | Cross-linked PVC rigid foam about 30 % | | | |
| 6 | Granulate of soft PVC/ Polyvinyl chloride included calcium carbonate about 80 % | 5-25 sek | 130-180 | 2-5 |
| | Cross-linked PVC rigid foam about 20 % | | | |
| 7 | Soft PVC/ Polyvinyl chloride about 70 % | 10-25 sek | 130-180 | 2-5 |
| | Cross-linked PVC rigid foam about 30 % | | | |
| 8 | Granulate and soft PVC/ Polyvinyl chloride included fibre wood; about 80 % | 5-25 sek | 130-180 | 2-5 |
| | Cross-linked PVC rigid foam about 20 % | | | |

Different moulding times influences the thickness of the different plates from 3-15 mm.

### Example 2. Plates produced by recovered PVC by moulding without heat.

**Table 2**

| No of plate | Contents of PVC waste | Moulding time [ sek] | Temp. [°C] |
|---|---|---|---|
| 1 | PVC Polyvinyl chloride waste + remains of metallic about 100 % | 10-20 | without heating |
| 2 | Polyvinyl chloride/soft PVC waste about 50 % | 5-10 | " |
| | Cross-linked PVC rigid foam waste about 50% | | |
| 3 | Granulate of soft PVC/ Polyvinyl chloride about 100 % | 25 | " |
| 4 | Granulate of soft PVC/ Polyvinyl chloride included calcium carbonate/ fibre wood about 60 % | 10-25 | " |
| | Cross-linked PVC rigid foam about 40 % | | |
| 5 | Granulate of soft PVC/ Polyvinyl chloride included calcium carbonate about 50 % | 5-25 | " |
| | Cross-linked PVC rigid foam about50 % | | |
| 6 | Granulate of soft PVC/ Polyvinyl chloride included calcium carbonate/ fibre wood about 80 % | 5-25 s | " |
| | Cross-linked PVC rigid foam about 20 % | | |
| | Soft PVC/ Polyvinyl chloride about 70 % | 10-25 | " |
| 7 | Cross-linked PVC rigid foam about 30 % | | |
| 8 | Granulate and soft PVC/ Polyvinyl chloride included fibre wood/ calcium carbonate about 80 % | 5-25 | " |
| | Cross-linked PVC rigid foam about 20 % | | |

Different moulding times influences the thickness of the different plates from 3-15 mm.

### Example 3. Plates produced by recovered PVC by moulding with or without heat.

**Table 3**

| No of plate | Contents of PVC waste and other plastic without PVC | Moulding time [ sek] | Temp. [°C] | Cooling [min] |
|---|---|---|---|---|
| 1 | PVC | 10-20 | 180-200 | 10 |
| | Polyvinyl chloride /cross-linked | | | |
| | PVC rigid foam about 70 % | | | |
| | LDPE about 30 % | | whitout heating | - |
| 1A | PVC | | | |
| | Polyvinyl chloride /cross-linked | | | |
| | PVC rigid foam about 70 % | | | |
| | LDPE about 30 % | | | |
| 2 | Cross-linked PVC rigid foam | | 130-180 | 10 |
| | waste about 50 % | 5-10 min | | |
| | LDPE about 50 % | | without | - |
| 2A | Cross-linked PVC rigid foam about 50 % | | heating | |
| | LDPE /PET about 50 % | | | |
| 3 | Granulate of soft PVC/ Polyvinyl chloride about 100% | 25min | 140-180 | 5 |
| | PS/EPS about 40% | | | |
| 3A | Granulate of soft PVC/ Polyvinyl chloride about 60 % | | without | - |
| | PS/EPS about 40 % | | heating | |
| 4 | Granulate of soft PVC/ Polyvinyl chloride/ Cross-linked PVC rigid foam about 60 % | 10-25 min | 140-180 | 5 |
| | EPS about 20 % | | | |
| | HDPE about 20 % | | without | - |
| 4A | Granulate of soft PVC/ Polyvinyl chloride/ Cross-linked PVC rigid foam about 60 % | | heating | |
| | EPS about 20 % | | | |
| | HDPE about 20 % | | | |
| 5 | Soft PVC/ Polyvinyl chloride included calcium carbonate about 60% | 5-25 sek | 130-180 | 2-5 |
| | Cross-linked PVC rigid foam about 30 % | | | |
| | PET about 10 % | | | |
| 5A | -Soft PVC/ Polyvinyl chloride included calcium carbonate about 60% | | without heating | - |
| | Cross-linked PVC rigid foam about 30 % | | | |
| | PET about 10 % | | | |
| 6 | Granulate of soft PVC/ Polyvinyl chloride about 60 % | 5-25 sek | 130-180 | 2-5 |
| | Cross-linked PVC rigid foam about 20 % | | | |
| | PP about 20 % | | | |
| 6A | Granulate of soft PVC/ Polyvinyl chloride about 60 % | | without heating | - |
| | Cross-linked PVC rigid foam about 20 % | | | |
| | PP about 20 % | | | |
| 7 | Soft PVC/ Polyvinyl chloride about 60 % | 10-25 sek | 130-180 | 2-5 |
| | Cross-linked PVC rigid foam about 30 % | | | |
| | HDPE about 10 % | | | - |
| 7A | Soft PVC/ Polyvinyl chloride about 60 % | | without heating | |
| | Cross-linked PVC rigid foam about 30 % | | | |
| | HDPE about 10 % | | | |
| 8 | Soft PVC/ Polyvinyl chloride included fibre wood about 70 % | 5-25 sek | 130-180 | 2-5 |
| | Cross-linked PVC rigid foam about 20 % | | | |
| | LDPE/HDPE about 10 % | | without heating | |
| 8A | -Soft PVC/ Polyvinyl chloride included fibre wood about 70 % | | | - |
| | Cross-linked PVC rigid foam about 20 % | | | |
| | LDPE/HDPE about 10 % | | | |

### Example 4

1. Plate A: 70-90 % PP + 10-30% cross-linked PVC rigid foam
2. Plate B: 70-90 % PVC + 10-30% cross-linked PVC rigid foam

### Total weight of the plates

| Plate (mm) | | Weight (g) |
|---|---|---|
| A1 | 328,68 x 328,49 x 5,02 | 501,54 |
| A2 | 328,54 x 323,36 x 5,03 | 501,83 |
| A3 | 323,81 x 323,63 x 5,04 | 501,38 |
| A4 | 323,73 x 323,79 x 5,04 | 507, 52 |
| A5 | 323,70 x 323,73 x 5,04 | 504,66 |
| B1 | 300,63 x 210,18 x 12,43 | 787,77 |
| B2 | 311,37 x 210, 47 x 12,41 | 833,70 |
| | | |

### Density of the plates

| Plate | Mean value for the density (g/cm3) |
|---|---|
| A | 0,944 |
| B | 1,033 |

### Pull strength

| Plate | Pull strength (MPa) |
|---|---|
| A | 7,758-8,750 |
| B | 6,909-7,589 |

### Hardness

| Plate | Hardness (HB) |
|---|---|
| A | 118-408 |
| B | 116-219 |

The values are in Brinell scale (HB)

### Example 5

Acoustic product

### Product 1

Polyvinyl chloride/soft PVC waste about 50 %
Cross-linked PVC rigid foam waste about 20 %
Glass wool waste about 30 %

### Product 2

ABS waste 60 %
Cross-linked PVC rigid foam waste about 20 %
Glass wool waste about 20 %

### Product 3

HDPE waste about 60 %
EPS waste about 25 %
Glass wool waste about 15 %

### Product 4

Polyvinyl chloride PVC waste included calcium carbonate about 60 %
Cross-linked PVC rigid foam waste about 25 %
Glass wool waste about 15 %

Addition of glass wool increases the acoustic effect and decreases the weight of the acoustic material.

## Claims

1. An extruded or pressed acoustic material comprising
a) From about 5 weight-% to about 60 weight-% of cellular foamed polymer particles selected from the group consisting of Cross-linked PVC rigid foam, polyurethane, polyester, polyether and polystyrene and
b) A binding agent being having a melting point below 180°C and optionally cellulosic materials, lime, fibres from tree, fibres glass and other synthetic fibres, wherein the total amount of b) is from about 40 weight-% to about 95 weight-%.

2. The extruded or pressed acoustic material according to any of claims 1, wherein said binding agent (b) is selected from the group consisting of PVC, rigid PVC, acrylonitrile butadiene styrene (ABS), PE (polyethen), LDPE & LLDPE, (polyethylene), HDPE (high density polyethylene) PS, EPS (polystyrene) and PET (polyethylene).

3. The extruded or pressed acoustic material according to any of claims 1-2, wherein said amount of the cellular foamed polymer particles are from about 10 weight-% to about 50 weight-%.

4. The extruded or pressed acoustic material according to any of claims 3, wherein said amount of the cellular foamed polymer particles are from about 10 weight-% to about 40 weight-%.

5. The extruded or pressed acoustic material according to any of claims 3, wherein said amount of the cellular foamed polymer particles are from about 30 weight-% to about 50 weight-%.

6. The extruded or pressed acoustic material according to any of claims 1-5, comprising up to about 30 weight-% of glass wool.

7. The extruded or pressed acoustic material according to any of claims 1-6, wherein said extruded or pressed acoustic material is a floor plate, wall plate, roof plate or noise walls.

8. A method producing an extruded or pressed acoustic material comprising the steps of;
a) providing used cellular foamed polymer particles selected from the group consisting of cross-linked PVC rigid foam, polyurethane, polyester, polyether and polystyrene,
b) grinding and/or pulverising said cellular foamed polymer particles
c) adding at least one binding agent having a melting temperature below 180°C,
d) homogenising said cellular foamed polymer particles and said binding agent,
e) moulding said cellular foamed polymer particles and binding agent and
f) obtaining an acoustics material as defined in claim 1.

9. The method according to claim 8, wherein said binding agent is selected from the group consisting of PVC, rigid PVC, acrylonitrile butadiene styrene (ABS), PE (polyethen), LDPE & LLDPE, (polyethylene), HDPE (high density polyethylene) PS, EPS (polystyrene) and PET (polyethylene).

10. The method according to any of claims 8-9, wherein said moulding is either heat or cold moulding and wherein said heat moulding is below 180°C.

11. The method according to claims 8-10, wherein an additional step of adding an agent is selected from the group consisting of cellulosic materials, lime, fibres from tree, fibres glass and other synthetic fibres prior to homogenisation.

12. The method according to claims 8-10, wherein an additional step of adding glass wool prior to homogenisation.

13. The method according to claims 8-12, wherein said heat moulding is between 160-180°C.
